# EUROPEAN PATENT SPECIFICATION

(11) **EP 0 407 679 B1**
(45) Date of publication and mention of the grant of the patent: **29.09.1993**
(21) Application number: 89830219.5
(22) Date of filing: 17.05.1989
(51) Int. Cl.: B03B 9/06, B29B 17/02

(54) **Mobile device for collecting and processing plastic containers and/or a heterogeneous plastic material**
Fahrbare Vorrichtung zur Sammlung und Verarbeitung von Kunststoffbehältern und/oder heterogenem Kunststoffmaterial
Dispositif mobile pour collecter et traiter des conteneurs en plastique et/ou de la matière plastique hétérogène

(43) Date of publication of application: 16.01.1991
(73) Proprietor: GOVONI SPA, Casumaro Ferrara (IT)
(72) Inventor: Gulmini, Carlo, Casumaro (Ferrara) (IT)
(74) Representative: Sassatelli, Franco T., Dr.

(56) References cited:
- EP-A- 0 220 936
- DE-A- 2 107 268
- DE-A- 3 535 633
- FR-A- 2 243 892
- GB-A- 1 552 118
- US-A- 3 847 293

## Description

The invention refers to a mobile device to be used on a differeniated collecting net of used containers in heterogenous plastic materials and which takes them up and instantaneously empties the ground station, without the presence of a staff and subsequently carries out the treatment with an unbroken processing during the removals in order to recover the materials. The device is used to recover plastic material to be recycled in order to obtain a re-qualified material and allows the integral and rational solution of the problems existing at present. The above named collecting stations can be set in different way in town centres or not, in particular positions such as fuel distributors. At present a device is foreseen which carries out a grinding of the containers on the ground in order to reduce their clearance, the material can then be taken up mechanically and sent to recycling plants. This system is based but on the exigency of reducing the volume of solid urban waste, but its use turns out to be expensive and strongly limiting since it requires a transforming unit on the collecting point, the presence of a staff on the ground for the loading operations and at last the necessity of carrying out the treatment on arrival. All these problems cause a collecting station net on the ground antieconomical and, therefore, not be proposed, are obviated by the present invented mobile device which with only one mobile device removes the waste and subsequently completely automatically recycles the materials.

It is also known the unit disclosed in the EP-A-0220936 which consists of a container on a vehicle, a breaker unit and compacting means but this unit is not able to separate liquid and to process plastic material during motion phase.

The invented mobile device foresees a suction line 1 which by means of a centrifugal fan 2 catches the containers which arrive into a hopper wherein they accumulate up to the line level 4 which,as soon as reached, cuts the loading flow into the hopper 3 by means of a probe. In addition the mobile arm 5 is foreseen which holds said suction line 1 on a telescopic bridge 6 and which, by means of the same suction line, gives also a dynamic vibrating action which facilitates the container emptying. This system can also allow the mechanically emptying of the station in an automatized way. The mobile arm 5 is driven by the driver of the vehicle 7 from its cabin inside. The containers stored up into the hopper 3 are broken by the breaker 8 with blades fitted on the shaft 9 the motion of which is given by the vehicle drive shaft or by a single diesel engine. The material thus obtained falls into centrifuge 10 which separates the liquids existing inside the containers from the other material. Said liquids are sent to a collecting tank 11 while the solid material falls on the magnetic device 12 which keeps the metal parts which will then be taken away during the cleaning operations actuated at the end of the working day. The remaining plastic material falls into the below blade rolls 13 where it is broken into small pieces and subsequently falls into the underlaying grade 14 and finally into the washing compartment with subsequent tanks 15 and 16. The working time in the station is programmed by means of a timer on the control board. For said washing phases a liquid is foreseen in the first tank 15 to be used also for degreasing besidewashing. This permits to separate the polythene from other polluting materials such as plastic plugs if any. At flotation end the plastic material is discharged, through valve 17, into the lower tank 16 wherein an agitator has been foreseen, and a highly salt solution can be used which lets the light plastic parts to float, whereas the heavy ones sink down on the bottom. By means of valve 18 the material is discharged into a centrifuge 19 which at the outlet, on its higher end, supplies a material dripped from washing and flotation liquids. This material is pneumatically loaded by means of fan 2 through line 20 and deflector 21 into the two containers 22 and 23 equipped with maximum level indicators 24 and 25 which, as soon as the maximum level has been reached, interrupt the loading flow. A special switch board 26 automatically checks the operation sequences of the device and sends drive signals to an oildynamic exchange 27 which distributes oil under pressure to the different points of use (rolls 13, agitator in the tank 16, centrifuge 19, fan 2). In particular the automatic continuous cycle check of the liquid into the tank 16 is performed by a feeder 28 which pump 29 which inlets a particular solution. Furthermore, the separate stocking of the plastic material which are contained into the containers 22 and 23 is foreseen from the reflued liquids which are contained into tank 30. The containers 22 and 23 can be emptied by upsetting them on their hinges 31 by means of pneumatic cylinders 32, while the reflued liquid from the tank 30 are discharged into the treatment and depuration installations foreseen by the City Administrations or by third empowered ones just for this aim. In this way the mobile device carries out the separated discharge of the material concerning the clean plastic material, which is then recycled towards new manufactured products or to combustion, and of the reflued liquids.

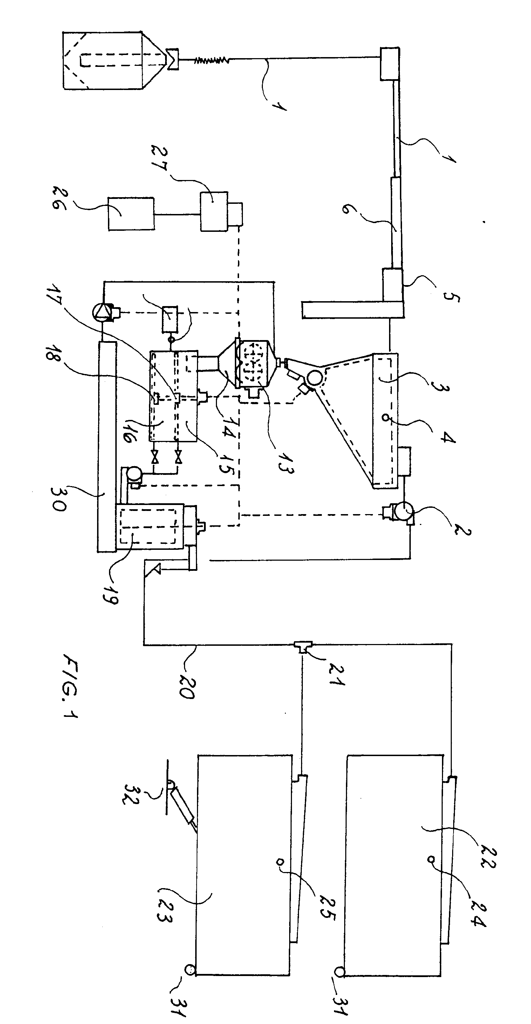

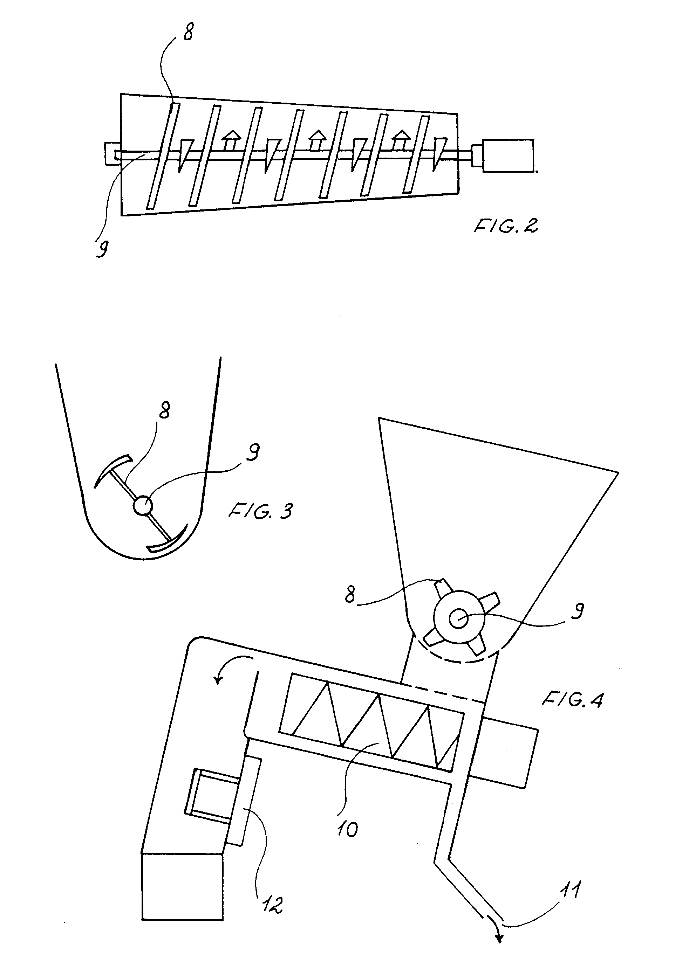

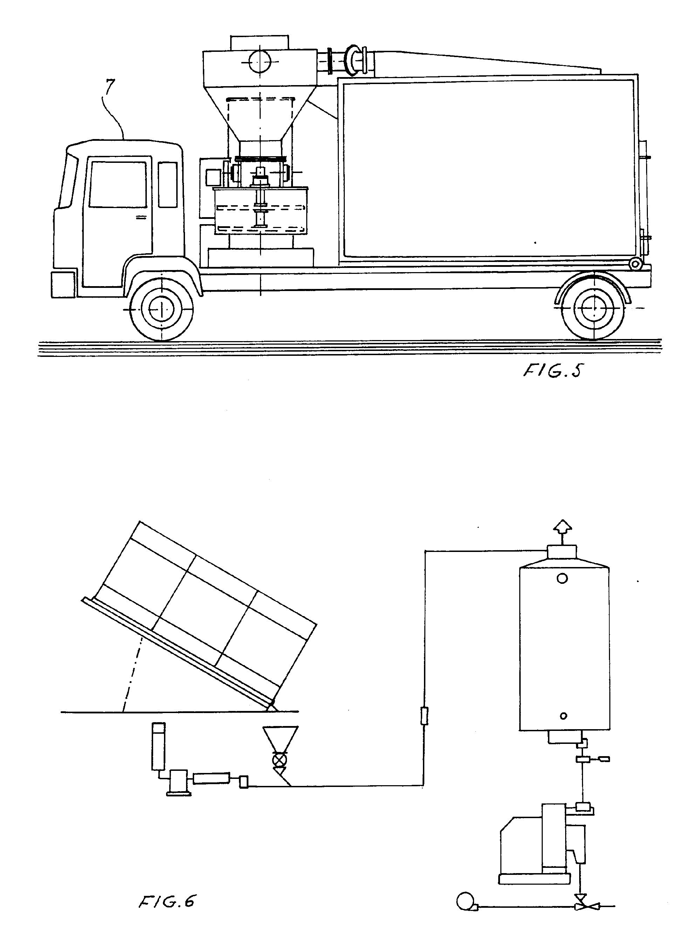

The mobile device is illustrated in figures of sheets 1, 2 and 3. With reference to these in sheet 1 fig. 1 is lateral view of all the mobile device. In sheet 2 fig. 2 is lateral view of the blade breaker 8. Fig. 3 is transversal view of the same breaker 8. Fig. 4 is view of all the crushing compartment with shaft 9, with below centrifuge 10 separating the liquids contained into the plastic containers and with the magnetic device 12. In sheet 3 fig. 5 is view of the mobile device on vehicle during moving phase. Fig. 6 is scheme of emptying phase of containers (22 and 23).

## Claims

1. Mobile device for collecting and processing plastic containers and/or a heterogeneous plastic material comprising a vehicle, containers (22 and 23) emptied by damping them on hinges (31) by means of pneumatic cylinders (32), a suction line (1) which by a centrifugal fan (2) permits to the sucked plastic containers to arrive to a hopper (3) with line level (4), and with a blade breaker (8) which receives motion by the vehicle drive shaft; characterized in that the material initally broken by the blade breaker (8) fitted on shaft (9) falls into a centrifuge (10) which separates the liquids from the solid material; after this separation said liquids are send to a collecting tank (11) whereas the other material falls on a magnetic device (12) which keeps the metal residues and then only the plastic material falls into the blade rolls (13) fitted below where it is broken into small pieces and arrives in an underlying grate (14) and then into a washing compartment with two tanks (15 and 16): in the first tank (15) washing and degreasing liquids are used so as to remove the plastic material from other polluting products, after the flotation the plastic material is discharged through a valve (17) into the lower tank (16) where a liquid agitator is foreseen and a high salt concentration solution can be used, this enables the light plastic parts to float, whereas the heavy ones sediment on the ground; by means of an additional valve (18) the plastic material is then discharged into a centrifuge (19) equipped with an outlet at its highest end from which the dripped plastic material moves out and it is sent by means of fan (2) and piping (20) equipped with a deflector (21) into the two containers (22 and 23).

2. Mobile device according to claim 1 in that when the sucked containers reach the line level (4) inside the hopper (3) the loading flow is interrupted by means of a control probe equipped with a photocell.

3. Mobile device according to claim 1 in that in order to permit its autopositioning the suction line (1) is supported by a mobile arm (5) on telescopic bridge (6) drived from the vehicle cabin.

4. Mobile device according to claim 1 in that in order to permit the complete outlet of the residual liquids from the plastic containers the mobile arm (5) supplies a dynamic vibration through the suction line (1).

5. Mobile device according to claim 1 in that the metal prats intercepted by the magnetic device (12) are removed at the end of the working day so avoiding to interrupt the working cycle.

6. Mobile device according to claim 1 in that the working times in the two washing tanks (15 and 16) are programmed by means of a timer on the control board of the vehicle.

7. Mobile device according to claim 1 in that the two containers (22 and 23) are equipped with maximum level indicators (24 and 25) which interrupt the loading flow as soon as they have been reached.

8. Mobile device according to claim 1 in that u switchboard (26) automatically checks the operational sequences and sends drive signals to an oildynamic exchange (27) which distributes oil under pressure to the different use points.

9. Mobile device according to claim 1 in that the liquid in the second washing tank (16) is automatically checked by a feeder (28) with pump (29) which inlets a salt solution.

10. Mobile device according to claim 1 in that the separate stocking of the collected plastic material is foreseen inside two containers (22 and 23) whereas the used liquids are stocked in other container (30).

## Patentansprüche

1. Fahrbare Vorrichtung zur Sammlung und Verarbeitung von Kunststoffbehältern und/oder heterogenem Kunststoffmaterial, daß ein Fahrzeug und entlehrbare Behälter (22 und 23) durch Kippen des Gelenkarms (31) mittels Druckluftzylinder (32), einem Saugrohr (1), welches mittels einem Ventilator mit einer Schleuder (2) den empfangenen Plastikbehältern erlaubt an einer Schleuder (3), die mit einer Niveaulinie (4) augestattet ist, anzukommen; und mit einer Messermühle (8), die seine Bewegung aus der Kraft des Fahrzeuges erhält, gekennzeichnet dadurch, daß das Material, das anfangs von der Messermühle (8) zerkleinert wurde, die auf einer Welle (9) angebracht ist, in eine Schleuder (10) fällt, die die Flüssigkeiten von den Festkörpern trennt; nach dieser Trennung werden die Flüssigkeiten an einen Auffangtank (11) geleitet, während das restiche Material auf eine magnetisches Gerät (12) fällt, das die Metallreste festhält, nur das Plastikmaterial fällt in die dafür vorgesetzene Messermühle (13), wo das Material zerkleinert wird und auf ein darunter angebrachtes Gitter (14) gelangt, hiernach in das Innere eines Waschbereichs mit zwei Wannen (15 und 16) gelangt: in der ersten Wanne (15) werden Waschmittel und Feltlöser benutzt, die so von dem Plastikmaterial andere verschmutzende Produkte entfernen, nach dem Flößen wird das Plastikmaterial mittels eines Ventils (17) in eine darunterstehende Wanne (16) ungeladen, in der Wanne ist ein Rührarm für dei Flussigkeit angebracht, dort kann eine hochkonzentrierte Salzlösung benutzt werden, die den Plastikteilen erlaubt zu Treiben, während die schweren Teile sich auf dem Grund ablagern; mittels eines weiteren Ventils (18) wird das Plastikmaterial dann in eine Schleuder (19) entladen, die an ihrem höheren Ende mit einem Ausgang ausgestallet ist, durch den das abgetropfte Plastikmaterial aushilt und von dort aus in zwei andere Behälter (22 und 23) geschickt wird; dies geschint mittels eines Ventilators (2) und der Linie (20), die mit einem Ableiter (21) ausgestallt ist.

2. Fahrbare Vorrichtung zur Sammlung und Verarbeitung von Kunststoffbehältern und/oder heterogenem Kunststoffmaterial, nach Anspruch 1), in dem die angesaugten Behälter die Niveaulinie (4) im Innern des Mühltrichters (3) erreichen, der Ladungsfluß wird mittels einer Kontrollsonde, die mit einer Fotozelle ausgestollet ist, unterbrochen.

3. Farhbare Vorrichtung zur Sammlung und Verarbeitung von Kunstoffbehältern und/oder heterogenem Kunstoffmaterial, nach Anspruch 1), in dem das Saugrohr (1) auf einem fahrbaren Gelenkarm (5) auf einer teleskopartigen Brücke (6), die von einem Fahrerhäuschen des Fahrzeuges gesteuert wird, zu dem Zweck, der Selbstpositioniereinrichtung der Fahrbaren Vorrichtung.

4. Fahrbare Vorrichtung zur Sammlung und Verarbeitung von Kunststoffbehältern und/oder heterogenem Kunstoffmaterial, nach Anspruch 1) in der der fahrbare Gelenkarm (5) über das Saugrohr (1) eine dynamische Vibration verursacht, die die komplete Entleerung des Restflüssigkeit zuläßt.

5. Farhbare Vorrichtung zur Sammlung und Verarbeitung von Kunststoffbehältern und/oder heterogenem Kunststoffmaterial, nache Anspruch 1), in dem die aus dem magnetischen Gerät (12) abgefangenen Metallteile am Ende des Arbeitstages entfernt werden, um eine Unterbrechnung des Arbeitszyklus zu vermeiden.

6. Fahrbare Vorrichtung zur Sammlung und Verarbeitung von Kunststoffbehältern und/oder heterogenem Kunstoffmaterial, in dem die Bearbeitungszeiten in den beiden Waschwannen (15 und 16) mittels eines Timers auf der Ueberwachungsstafel des Farhzeuges programmiert sind.

7. Fahrbare Vorrichtung zur Sammlung und Verarbeitung von Kunststoffbehältern und/oder heterogenem Kunststoffmaterial, nach Anspruch 1), in dem die beiden Behälter (22 and 23) mit Anzeigern, die das Höchstniveau (24 und 25) angeben, augestallet sind, die Anzeiger unterbrechen den Ladungsfluß, sobald das Höchstniveau erreicht ist.

8. Fahrbare Vorrichtung zur Sammlung und Verarbeitung von Kunststoffbehältern und/oder heterogenem Kunststoffmaterial, nach Anspruch 1), in dem eine elektrische Schalttafel (26) die Durchführungsfolge automatisch kontrolliert und Komandosegnale an eine Oelkraftzentrale (27) sendet, die unter Druck Oel and die verschiedenen Stellen, die Oelbrauchen, verteilt.

9. Farhbare Vorrichtung zur Sammlung und Verarbeitung von Kunststoffbehältern und/oder heterogenem Kunststoffmaterial, nach Anspruch 1), in dem die Flüssigkeit in der sweiten Waschwanne (16) automatisch von einem Zuführer (28), der mit einer Pumpe (29) ausgestattet ist, die eine Salzlösung eingibt, kontrolliert.

10. Fahrbare Vorrichtung zur Sammlung und Verarbeitung von Kunststoffbehältern und/oder heterogenem Kunststoffmaterial, nach Anspruch 1), in dem eine separate Lagerung des Plastikmaterials, das in den beiden Behältern (22 und 23) gesammelt wird, von den benutzten Flüssigkeiten, die in einem anderen Behälter (30) gelagert werden, vorsesehen ist.

## Revendications

1. Dispositif mobile pour collecter et traiter des conteneurs en plastique et/out de la matière plastique hétérogène constitué d'un véhicule, de deux conteneurs (22 et 23) qui peuvent être vidés en les faisant basculer sur des charnières (31) au moyen de cylindres pneumatiques (32), d'une ligne aspirante (1) qui à l'aide d'un ventilateur muni d'une centrifugeuse (2) permet aux conteneurs en plastique captés d'arriver à une centrifugeuse (3) avec une ligne de niveau (4), et avec un broyeur à lames (8) qui reçoit le mouvement de la prise de force du véhicule; caractérisé par que le matériel initialement broyé par un broyeur à lames (8) positionné sur un arbre (9) tombe à l'intérieur d'une centrifugeuse (10) qui sépare les liquides du matériel solide; après cette séparation les dits liquides sont acheminés vers un réservoir pour la collecte (11) tandis que les matériels solides tombent sur un appareil magnétique (12) qui retient les résidus métalliques et par conséquent seulement le matériel plastique tombe à l'intérieur d'un moulin à lames (13) installé au-dessous où le matériel plastique est brésillé en petits morceaux et echeminé vers une grille placée au dessous (14) et ensuite à l'intérieur d'un secteur de lavage à deux cuves de rinçage (15 et 16): dans le premiére cuve (15) sont utilisés lavage et dégraissage de façon que les différents produits polluants du matériel plastique viennent enlevés, après flottation le matériel plastique est déchargé à travers une soupape (17) dans une cuve sous-jacente (16) à l'intérieur de laquelle il existe un agitateur du liquide, et où peut utiliser une solution à haute concentration saline, ce qui permet aux morceaux en plastique légère de flotter en surface tandis que les parties lourdes vont former des sédiments au fond de la cuve; par une soupape supplémentaire (18) le matériel plastique est ensuite déchargé dans une centrifugeuse (19) équipée à son extrémité supérieure d'une sortie de laquelle le matériel en plastique drainé sorte et est transporté au moyen d'un ventilateur (2) et de la ligne (20) équipée d'un deviateur (21), à l'intérieur de deux conteneurs (22 et 23).

2. Dispositif mobile, selon la revendication 1), où lorsque les conteneurs aspirés atteignent la ligne de niveau (4) à l'intérieur de la tremie (3) le flux de chargement est interrompè au moyen d'une sonde de contrôle équipée d'une photocellule.

3. Dispositif mobile, selon la revendication 1), où afin de permettre son autopositionnement la ligne aspirante (1) est supportée par un bras mobile (5) placé sur un pont télescopique (6) commandè de la cabine du véhicule.

4. Dispositif mobile, selon la revendication 1), où afin de permettre le vidange complet des liquides residus des conteneurs en plastique le bras mobile (5) donne une vibration dynamique à travers la ligne aspirante (1).

5. Dispositif mobile, selon la revendication 1), où les parties métalliques interceptées par l'appareil magnétique (12) sont enlevées à la fin de la journée de travail afin d'éviter l'interruption du cycle d 'usinage.

6. Dispositif mobile, selon la revendication 1), où les temps d'usinage dans les deux cuves de rinçage (15 et 16) sont programmés par un timer sur le panneau de commande du véhicule.

7. Dispositif mobile, selon la revendication 1), où les deux conteneurs (22 et 23) sont équipés de jauges de niveau (24 et 25) qui coupent le flux de chargement dés que les niveaux ont atteint le maximum.

8. Dispositif mobile, selon la revedication 1), où le tableau électrique (26) contrôle automatiquement les séquences opératives et envoie des signaux de contrôle à un distributeur oléo-hydraulique (27) qui distribue de l'huile sous pression aux différents points d'exploitation.

9. Dispositif mobile, selon la revendication 1), où le liquide dans le deuxième cuve de rinçage (16) est contrôlé automatiquement par un alimentateur (28) avec une pompe (29) qui aspire une solution saline.

10. Dispositif mobile, selon la revendication 1), où on a prévu le stockage séparé de la matière plastique recueillies à l'intérieur de deux conteneurs (22 et 23) tandis que les liquides employés sont récupérés et stockés dans un conteneur séparé (30).
